# EUROPEAN PATENT APPLICATION

(11) **EP 2 337 324 A1**
(43) Date of publication of application: **22.06.2011**
(21) Application number: 10166906.7
(22) Date of filing: 22.06.2010
(51) Int. Cl.: H04M 3/42

(54) **Method and apparatus for sending call context information**

(30) Priority: 18.12.2009 US 653837
(71) Applicant: Mitel Networks Corporation, Ottawa, ON K2K 2W7 (CA)
(72) Inventor: Trinh, Trung, Nepean Ontario K2G 0Z5 (CA); Gray, Thomas A., Mansfield Québec J0X 1R0 (CA)
(74) Representative: Derry, Paul Stefan

(57) **Abstract**

A system and method of call handling that supplies the reason of the call using voice or text depending on the capabilities of the receiving telephone enhancing the caller ID function. Comprising a first communications device having an acceptor (202) of call purpose from a first party for a call, a communications channel including a conveyor (204) of call purpose and a second communications device coupled to the first communications device via the communications channel and having a presenter (206) of call purpose to a second party.

## Description

### Field of the Invention

The present invention relates to methods and apparatuses for call handling and is particularly concerned with call identification.

### Background to the Invention

Caller ID display is a commonly supplied and commercially popular feature in telecom systems for both business and personal use. With this feature, the telephone number and in some embodiments, a name asserted with this number is displayed on a telephone for an incoming call. With this information, a user may assess whether or not to accept an incoming call or to allow for other call handling such as voice mail to be supplied. The called user is thus given control to assess the priority of an incoming call in relation to his/her current context. A user can utilize this to partition their attention so that they will not be distracted by matters which are not deserving of immediate attention.

Caller ID display is a useful feature but it is not a complete solution to the issue. For example, an incoming call may be displayed as a call coming from a colleague. However, the purpose of that colleague's call is still unknown. The call may concern an urgent and important issue or it may be a question about what to do for lunch as an example. The user will not know which until he/she accepts the call.

### Brief Description of the Drawings

The present disclosure will be further understood from the following detailed description with reference to the drawings in which:
Fig. 1 illustrates a communications system in which an embodiment may be used;
Fig. 2 illustrates a system for providing call purpose in accordance with an embodiment;
Fig. 3 illustrates an acceptor of Fig. 2 in further detail; and
Fig. 4 illustrates a presentor of Fig. 2 in further detail.

### Detailed Description

Systems and methods disclosed herein provide a communication system for call handling to address at least some of the aforementioned disadvantages.

It is an aim of the current disclosure to provide improved systems and methods in a communication system for call handling.

A method of linking a call to its purpose and displaying that purpose along with the call alerting indications, in a similar manner to Caller ID, would be a useful feature for users and would make a vendor's telecom products more attractive in the market place.

The present disclosure teaches a technology whereby the user can accomplish the call purpose identification task without undue difficulty. Users will not use a system that is distracting from their primary tasks and so an object of this disclosure is to integrate the setting of a call purpose information into the user-expected methods of generating call attempts and to make the effort in generating them as little as possible. The disclosure will also address means by which call purpose will be announced to called parties on conventional and other types of devices.

In accordance with an embodiment there is provided a system for call handling comprising an acceptor of call purpose from a first party for a call, a conveyor of call purpose and a presenter of call purpose to a second party.

This disclosure describes a call purpose announcement system. The calling party in a telecom or collaboration system may record a brief announcement detailing the purpose of the call. This will be sent with the call invitation to the called party. It can be displayed at the called party end and can be useful in the called party's decision on call disposition. The disclosure describes the recording techniques for announcements, their association with the call invitation and how they may be displayed. A number of alternate features used by the called party for forwarding, creation by the attendant, call logs and call archiving are also taught.

In accordance with another embodiment there is provided a method comprising accepting a call purpose from a first party for a call, conveying the call purpose from the first party to a second party and presenting the call purpose to the second party.

Conveniently, the call purpose will be facilitated by three distinct pieces of technology. These are:
a) Means by which call purpose can be entered by the call originator
b) Means by which call purpose can be associated with the call in the call invitation and for further extensions to the call such as call forwarding, call detail recording, call archiving.
c) Means by which the call purpose can be displayed or otherwise presented to the called party.

In accordance with a further embodiment there is provided a system for call handling comprising a first communications device having an acceptor of call purpose from a first party for a call, a communications channel including a conveyor of call purpose and a second communications device coupled to the first communications device via the communications channel and having a presenter of call purpose to a second party.

These technologies although they are related by the need for interworking are distinct and will be described separately in the following sections.

The description below will be based on two alternative means by which to originate and receive telephone calls. These will be by a telephone and a computer interface. The telephone will be assumed to have the expected voice and limited control interfaces. Both traditional analogue and digital (IP and TDM - ISDN etc.) telephones will be discussed. A computer interface will assume a voice and control interface. The control interface will assume the extensive screen, keyboard, etc capabilities that are typically assumed for a computer. It will be assumed that the computer control interface can utilize GUI technology. Cellular telephones, portable computers, netbooks and other portable devices combine aspects of both of these types of interfaces. The use of such devices will be covered by the specific descriptions of the computer and telephone interfaces. A person of ordinary skill in the art will understand how the specific aspects of each interface may be adapted to these devices which exhibit characteristics of both.

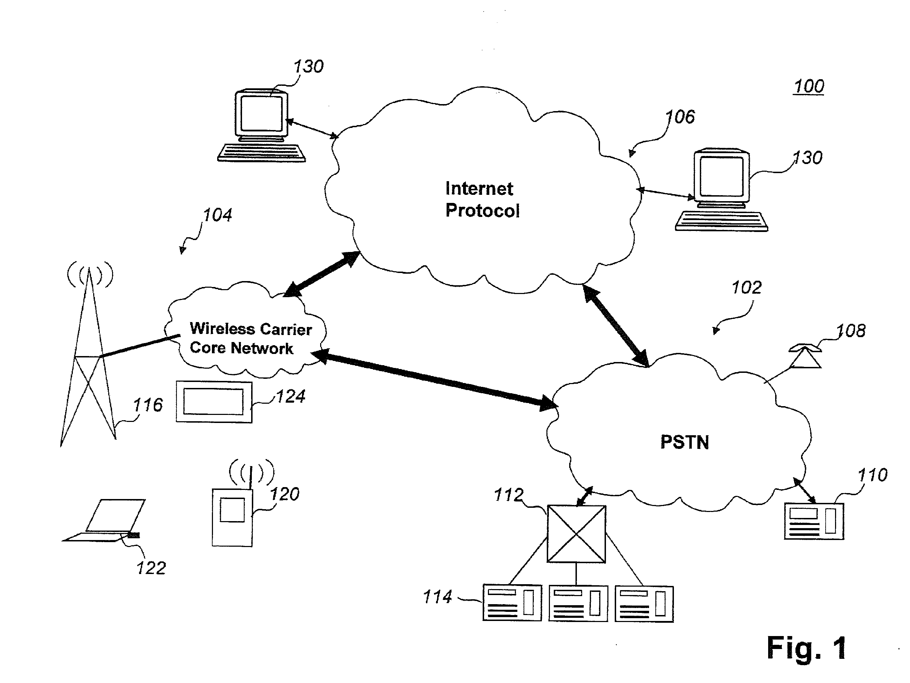

Referring to Fig. 1 there is illustrated a communications system in which an embodiment may be used. The communications system 100 includes a public switch telephone network (PSTN) 102, a wireless communications network 104 and an Internet protocol (IP) network 106. Each network 102, 104 and 106 is interconnected so that end users can communicate with each other. The PSTN network 102 may have a variety of end user devices connected to it. These included, but are not limited to plain old telephone system (POTS) telephones 108, ISDN telephones 110, public branch exchanges (PBX) 112 and their associated telephones 114. Similarly, the wireless communications network 104 may have traditional handheld wireless telephones 120, wireless computing devices 122, and personal data assistant (PDA) devices 124 coupled to it. Finally, the Internet protocol network 106 may have a wide variety of computing devices 130 coupled to it. Whenever an end user wishes to contact another end user, some kind of a call set up is necessary.

One of the issues in the modern world is having to prioritize one's activities both at work and at home. With the omnipresence of communications devices, a large part of that prioritization has to do with accepting incoming calls on whatever type of device the user may have in their possession at the time the call is received. As discussed above, it would be extremely useful to have an indication of the reason for the call before answering the call. The present disclosure proves a method and apparatus for providing to a called party, the purpose of the call. The called party can then decide whether or not to accept the call based at least in part on the call purpose message.

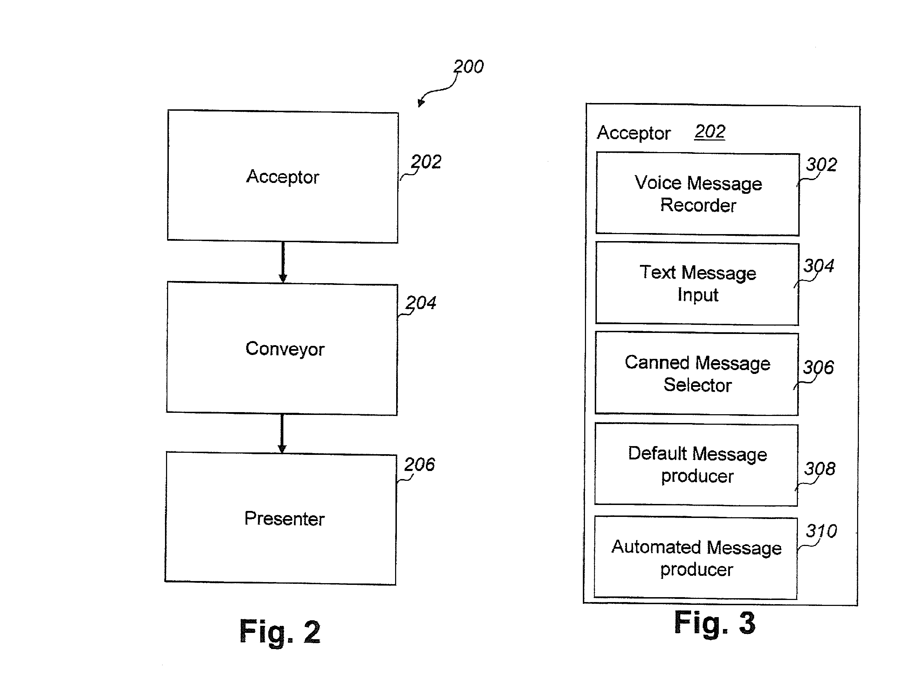

Referring to Fig. 2, there is illustrated a system for providing call purpose. The system 200 includes an acceptor 202 for accepting a call purpose message from a calling party 204. The system also includes a conveyor 206 for carrying the message from the calling party 204 to a called party 206. Finally the system includes a presenter 208 for presenting the message to the called party 206.

Referring to Fig. 3 there is illustrated an acceptor of Fig. 2 in further detail. The acceptor 202 may capture call purpose in a variety of ways:
a) Recording a voice call purpose message 302;
b) Entering a text call purpose message 304;
c) Selecting a canned call purpose message 306;
d) Selecting a default message 308; and
e) Automatic creation/selection of message 310.

Each of these methods of assignment may be done from any of the end user devices shown in Fig. 1, for example from a telephone or computer interface.

In both the telephone and computer interface, the user may record a voice message. A design choice is to make a recording during the call set up before or after the user has entered the called party identity information. The recording may be offered automatically or by user initiation and this option may be chosen by user or system preference.

In the telephone interface, a user can indicate a desire to make a call purpose announcement recording by entering a feature access code before the dialled digit information. For example, a feature access code of *80 may be chosen and the user would dial *80 before the called party's directory number. The user would then be given a voice announcement to begin recording of the call purpose. The user may be given controls so that he can replay and edit the message before the call is made. The user may be given the option of re-recording the message or rejecting the message and making the call without the call purpose announcement. These controls would make use of the DTMF keys in a similar manner to the well-known methods of editing voicemail messages.

For the computer interface, a GUI provides controls for creating the voice message. These allow the user to create and edit a call purpose announcement. On user or system preference, the GUI may be set to require that a message be recorded for all calls or this can be optional so that the user can initiate a call without making a recording.

The user may also be given the capability of entering a text call purpose message announcement. In the computer interface, a GUI may be given with a text box for the entry and editing of this message. In the telephone interface, the user may select the text option by entering a special feature access code. Text may be entered by use of the telephone keypad. This may be done using the well-known techniques of entering one of more keystrokes on a key to select among the letters assigned to the key. For a display phone, the text may be echoed on the display. For telephones without a display, the keystroke information may be echoed though a voice interface. For the non-display telephone, the user may be given controls so that the text message can be echoed back to him/her through a text to speech converter. Alternatively, for a telephone, the text may be entered by voice through an automatic speech recognition system. It will be echoed back as described previously whether on the display or through the speech-to-text converter.

As with the voice recording, entering a call purpose announcement may be optional or compulsory on user or system option. The user will be given controls to review and edit the message.

It may be found convenient to offer a selection of prerecorded call purpose announcement messages for selection by the user. This may be done on both the computer and the telephone interface. In the computer interface, the GUI may provide a selection of prerecorded or canned messages from a pop-up menu with radio buttons or in a drop down box among other methods. From the telephone interface, the user may enter a special feature access code for selection. For example, if there are 20 possible canned messages and the feature access code for calling with a canned message is *81 then the user may enter *81NN where NN is the number of the message from 00 to 20.

These canned messages may be either voice or text and messages of both types may be offered simultaneously in the selection. Some, none or all of these messages may have been recorded by the user while some, none or all may be supplied with the system.

The use of canned messages relieves the user of repetitively making routine recordings. For example, there may be a canned message that indicates that the call is intended to discuss a meeting proposal. This may be supplied by the system and can be quickly selected by the user. The user can also be given the option to create their own canned recording to accommodate their own particular circumstances. For voice recordings, this gives the user the option of using their own voice which can increase the effectiveness of the recording in gaining the called party's attention.

The need to make a recording on every call, even routine ones, could make this system unattractive to users. To overcome this, a default recording may be provided that will be used on all calls except those in which the user wishes to explicitly make a new recording or selection. This may be provided for the same controls as used for the text or voice messages. A recording will be automatically entered and the user may be given the option of editing or rejecting this message. The user may also be given the option of selecting a different canned message.

Either the system or the user may supply the default message.

To increase the benefit of the default message described above, different default messages may be selected given certain user circumstance. For example, if call is initiated from the user appointment diary, a default message of meeting proposal may be chosen.

For calls coming into a system from external parties, it is often the case that the call will be first answered by an attendant for redirection to an internal party. In such a case, the attendant may be given the user capabilities for recording as described above. The attendant will inquire of the calling party of the purpose of his/her call and will create/select an appropriate call purpose message. This call purpose message will then be used on the internally forwarded call. The attendant may be given the capability to ask the caller to make a call purpose announcement recording. This may be done in either text or voice. For text capture, a separate text session may be set up with IP technology to transfer the user's text message to the attendant.

It is often the case, that the attendant role in an organization will be fulfilled by means of an auto-attendant functionality. Such functionality will allow incoming callers to directly call internal parties. Using an IVR (interactive voice response) system, incoming callers will be offered various possibilities. Commonly a voice recording will offer them options such as 'For The Internal Directory Dial 8, To Call Directly Dial 9, To Connect to an Attendant Dial 0'. It is also common that ASR (Automatic Speech Recognition) technology is supplied so that callers can choose to enter options either by DTMF tone or speech. Such systems can be extended to provide the same sort of call purpose functionality as that described above for human attendants.

At some point during the caller interaction, the auto-attendant may propose the option of entering a call purpose announcement by either voice or text. This option may be presented at any time but will commonly be presented after the caller indicates which user or directory number that he or she wishes to be directed to. Thus, using as a non-limiting example the options described above, the call purpose announcement may be entered after the caller has interacted with the company directory, or has entered the directory number directly. Alternatively, a new option to enter a call purpose announcement message may be presented among the announcements previously described as a non-limiting example.

It is often the case of unified communication systems that external callers are known to the system. These may be employees of other organizations in a supply chain, important customers etc. Such people will routinely interact with people inside of the organization and will be regarded as normal actors in the processes within the system. Calls from such people can be recognized by analysis of these ANI, Caller ID, SIP address and similar forms of identification associated with call attempts. With this identification, the call purpose announcement system can provide such callers with the same types of services as it does people within the organization. These callers may be provided with the options for the canned and default messages described above. A co-pending U.S. Application No. 12/006,651 filed on January 4, 2008 entitled "S & M for Associating Communication Devices" and assigned to Mitel, hereby incorporated by reference, teaches how context indications can be sent in SIP invitations and other call invitation messages. This type of information provides a technique for the adaptive or automatic methods of selecting announcements as described elsewhere in this disclosure.

External callers interact with the system via an attendant or auto-attendant. The attendant is provided with the functionality described above with the addition of the canned and default messages being suited for the caller. Similarly, the auto-attendant functions as described above with the addition of the customer suited canned and default messages.

It is often the case that a call will be forwarded to other parties for use. This is shown in the example of the attendant above but the directly intended recipient may do it as well. The recipient may, for example, forward the call to someone else who is better able to answer a question or a secretary screening calls may wish to add an announcement to inform his/her boss of the purpose of the forwarded call. In such a case, the recipient may wish to either place his/her own call purpose announcement message with the call or to preface the original call purpose announcement message with one of his her own. In either the telephone or computer interface, this can be done in a similar manner to the default message method described above. The original message may be used as a default message with the user given the option of deleting it or modifying it, by adding a preface or in some other way.

The attendant, as described above, may make use of this capability to allow a calling party to make a call purpose statement and then add more explanation.

This capability may be selected at either user or system option.

The section above has described how a user may elect to have a call purpose announcement message associated with their outgoing call. This recording may be placed in a text or multimedia file. The association with the call, may be done by placing a special indication in the call invitation message. For SIP, this may take the form of a special header similar to the one that is used for Caller ID. The file may be placed in the field associated with this header or a URL pointing the file may be placed there. This information associated with this header may be extracted and used by the receiver. This header and its information may also be used by the receiver if it chooses to extend the call by redirection or forwarding.

In a standard PBX, the call purpose announcement massage may be placed in the call record which holds all details surrounding the call. The call record is available to features within the PBX and so the call purpose announcement may be used for a variety of features, some of which will be described below. As with the SIP example above, announcement may then be used with call extensions such as forwarding.

This section will describe how call purpose announcement messages are displayed/heard on various expected devices. For the sake of brevity, the term "presented" is used for both voice and text messages.

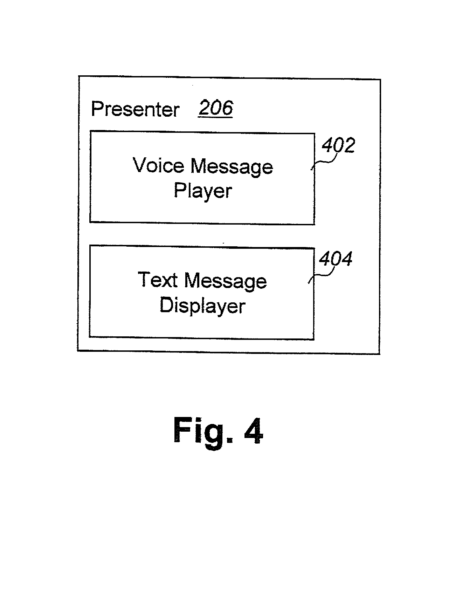

Referring to Fig. 4 there is illustrated a presenter of Fig. 2 in further detail. The presenter 206 resides in the end user terminal and includes at least one of a voice message player 402 and a text message display 404. It is likely that a user may wish to be able to select in which modality an announcement may be presented. For this purpose, speech recognition and text to speech conversion equipment may be used to convert the incoming announcement message into the desired modality. This may be selected at the user's option. Certain devices may have only limited capability for the display of one modality. For example, analogue telephones will have only limited, if any, text display capability. In such cases, messages in the modality of the less capable display may automatically be converted to the other modality.

An analogue telephone may have only a minimal display that is normally used for only call id display information. As well, the bandwidth of the channel for transferring text information can be quite limited. For example, the caller id information is transferred between the first and second rings. Thus for an analogue telephone, the call purpose announcement message will often be displayed as a voice message automatically. For incoming text messages, the switch supporting the telephone may utilize a text to speech converter to transform the text message to voice.

Various ways are possible for presenting the voice message. In one method, a tone indication is given to indicate that an announcement is available. The user may then enter a DTMF code to trigger the playing of the announcement. The user will then have the option of receiving the call of indicating some other disposition for it. Alternatively, the announcement may be placed automatically with the user either given the option of indicating a disposition of the call or alternatively having the call automatically cut through after the announcement.

If the display of the message as text is desired then the text can be downloaded between ring cycles as in the caller id example or after the call is answered. In each case, the text may be displayed on the display usually used for caller id display. To overcome the case in which the display is of limited size, the message may be scrolled though on the display either line by line, word by word or letter by letter or alternating the display of the caller ID and the call purpose.

For digital (ISDN, PBX etc.) or IP telephones, the bandwidth for transfer of messages (text and voice) can be quite large. The telephone itself is much more autonomous than in the analogue case which gives much greater possibilities for it. The digital or IP telephone may supply all methods described above for analogue telephones for the display of the announcement plus additional ones that take advantage of the special capabilities of the digital telephone. For example, a digital telephone is not supplied with ringing current but generates its own ringing or alerting signal upon reception of a call invitation message from its controller or proxy. It is common for cell phones to play ringtones that are musical pieces selected by the user. In the case of this disclosure, digital or IP telephones may play the call purpose announcement message as their call alerting signal.

The typically larger display, in contrast to the analogue telephone, will allow the display of text messages for these digital and IP telephones.

A computer may be supplied with a display to present the call purpose announcement among other things on the reception of an incoming call. The above-referenced co pending Mitel application teaches the display of a GUI on the reception of call information that displays information about the caller as well as data about the current context in which the call is being initiated. This GUI display may be expanded to display both text and voice messages. A text message may be displayed in a dedicated box, pop up box etc. while the voice message may be played with the first appearance of the GUI as an alerting message. Alternatively the GUI may contain controls that will allow the call announcement message to be played at the user's option and replayed at will.

It is known in the art for telecom systems to provide a feature whereby incoming calls may be archived. This may be done for both incoming and outgoing calls. This service can be supplemented by storing the call purpose announcement with these calls. A user reviewing a call archive may use the call purpose announcement associated with a call as a quick reminder of what the call is about. These announcements will provide a precise of the intent of the call and can usefully be used for searching for particular topics and creating indexes of related calls. The archive may be presented to the user in the form of a computer GUI or though a telephone interface in a manner similar to that done conventionally for voice mail.

Call logs are also a common feature supplied with modern telecommunication systems. Users are provided with a display by means of which they can be presented with a listing of call attempts to their personal directory number, SIP address, telephone etc. The user may use this as a means of determining whom they should try to interact with. Call purpose announcements can be stored in memory and associated with the calls in the use call log. The user may use the announcements to further inform his/her decisions on with whom to attempt interaction.

The above-referenced co-pending Mitel application teaches a context object in which the collaboration interactions related to an enterprise goal are maintained. This can include the e-mails and call attempts related to the goal. The call purpose announcements related to calls associated with a context may be maintained in the context object as well. This further aids the members of the group associated with the context in understanding the interactions that have gone on within it. It also allows the announcements to be available for use by other applications, which can be of use to members of the context.

A number of GUIs will allow for the creation of call purpose announcements. For example, the automatic creation description above describes how calls may be set up from a user diary or calendar application and with that the default announcement set to an appropriate one. Similar to this is the GUI that is normally used for IM (instant messaging). It can be useful for an ongoing conversation to move from IM to voice and it would be useful to users if this could be done directly from the IM GUI. So the user could select a button or use some other means of indicating the he or she wishes to add a voice connection to the conversation. In such a case, the option can be provided to allow the user to enter a call purpose announcement message as text through the IM GUI. One non-limiting example would be to select the last IM text entry in the GUI the default call purpose announcement message. This may be sent directly or the user could be given options to provide and edit a voice announcement or to edit the just selected default message.

Numerous modifications, variations and adaptations may be made to the particular embodiments described above without departing from the scope patent disclosure, which is defined in the claims.

## Claims

1. A system for call handling comprising:
an acceptor of call purpose from a first party for a call;
a conveyor of call purpose; and
a presenter of call purpose to a second party.

2. The system of claim 1, wherein the acceptor includes a voice message system.

3. The system of claim 2 or claim 3, wherein the voice message system includes a plurality of prerecorded messages and a selector for the message.

4. The system of any of claims 2 to 4, wherein the voice message system includes a voice message recorder.

5. The system of any of claims 2 to 5, wherein the voice message system includes a speech recognizer.

6. The system of any preceding claim, wherein the presenter includes an audio output device.

7. The system of claim 6, wherein the presenter includes a text-to-speech converter.

8. The system of any preceding claim, wherein the presenter includes a visual display device.

9. The system of claim 6, wherein the conveyor includes an indication in a call invitation message.

10. The system of claim 8, wherein the conveyor includes a field in a call set up message.

11. A system for call handling as claimed in any preceding claim, comprising:
a first communications device, a communications channel, and a second communications device,
the first communications device having the acceptor of call purpose from a first party for a call;
the communications channel including the conveyor of call purpose; and
the second communications device coupled to the first communications device via the communications channel and having the presenter of call purpose to a second party.

12. A method of call handling, the method comprising:
accepting a call purpose from a first party for a call;
conveying the call purpose from the first party to a second party; and
presenting the call purpose to the second party.

13. The method of claim 12, wherein the step of presenting either:
provides the call purpose to the second party before the second party answers an associated call, or
provides the call purpose to the second party as part of call set up for an associated call, or
includes playing an audio message, or
includes displaying text message.

14. The method of claim 12 or claim 13, wherein the step of accepting includes:
the step of recording a message from the first party, or
the steps of presenting a plurality of prerecorded messages to the first party and receiving a selection of a prerecorded message from the first party.

15. The method of claim 12, claim 13 or claim 14, wherein the step of conveying includes:
the step of associating the call purpose message with the call, or
the step of placing the call purpose messages in a call record for the call.
